# EUROPÄISCHE PATENTSCHRIFT

(11) **EP 0 602 444 B1**
(45) Veröffentlichungstag und Bekanntmachung des Hinweises auf die Patenterteilung: **31.01.1996**
(21) Anmeldenummer: 93119250.4
(22) Anmeldetag: 30.11.1993
(51) Int. Cl.: F16K 17/04

(54) **Sicherheitsventil für Hochdruckpumpen, Hochdruckwasserstrahlmaschinen od.dgl.**
Safety valve for high-pressure pump; high-pressure water jet machine
Vanne de sécurité pour pompe à haute pression; machine à jets d'eau à haute pression

(30) Priorität: 09.12.1992 DE 4241344
(43) Veröffentlichungstag der Anmeldung: 22.06.1994
(73) Patentinhaber: Paul Hammelmann Maschinenfabrik GmbH, D-59302 Oelde (DE)
(72) Erfinder: Barnowski, Ulrich, Dipl.-Ing., D-59302 Oelde (DE)
(74) Vertreter: Stracke, Alexander, Dipl.-Ing.

(56) Entgegenhaltungen:
- EP-A- 0 158 776
- DE-A- 2 110 906
- DE-A- 3 107 775
- US-A- 3 780 759

## Beschreibung

Die Erfindung bezieht sich auf ein Sicherheitsventil für Hochdruckpumpen, Hochdruckwassertrahlmaschinen o.dgl. mit einem Ventilsitz und einem dem Ventilsitz zugeordneten Ventilkörper das bis zum Erreichen des eingestellten Druckes absolut dicht schließt.

Die sicherheitstechnischen Anforderungen für Hochdruckwasserstrahlmaschinen fordern ein Ansprechen der Sicherheitsventile bei einer Überschreitung des Einstelldruckes um zehn Prozent.

Sicherheitsventile, die mit einer ausreichenden Lebensdauer in einem Druckbereich bis zu 4.000 bar eingesetzt werden können, sind auf dem Markt nicht vorhanden.

Die US-A-3 780 759 Patentschrift beschreibt ein Sicherheitsventil mit einem Ventilsitz und einem dem Ventilsitz zugeordneten federbelasteten Steuerkolben, in dem die Feder sich einerseits am Steuerkolben und andererseits an einem Schaltstück abstützt, das beim Erreichen des kritischen Arbeitsdruckes durch Freigabe einer Arretierung zu der dem Ventilsitz abgewandten Seite bewegbar ist.

Der Erfindung liegt die Aufgabe zugrunde, ein Sicherheitsventil der eingangs genannten Art so zu gestalten, daß es in einem Druckbereich bis 4.000 bar und mehr eingesetzt werden kann, mit hoher Schaltgenauigkeit beim Überschreiten des eingestellten Druckes arbeitet und bei geringem Verschleiß eine große Lebensdauer aufweist. Ebenfalls soll das Ventil ein mehrfaches Ansprechen ohne neue Justierung des Einstelldruckes erlauben. Diese Aufgabe wird erfindungsgemäß gelöst durch die Merkmale des 1. Anspruchs.

Die Feder, die mit der mit dem Druckmedium belasteten, genannten Ringfläche zusammen die Schließkraft des Steuerkolbens erzeugt, wird entspannt, so daß der Steuerkolben vom Ventilsitz abhebt und den Abflußstutzen für das Druckmedium freigibt.

Das erfindungsgemäße Sicherheitsventil ist so gestaltet, daß ein durch eine Feder belasteter Steuerkolben, der ferner eine Ringfläche aufweist, die mit dem Druckmedium belastet ist, einen Ventilsitz mit einer Kraft verschließt, die einen Druck zuläßt, der ca. 500 bar höher liegt als der Arbeitsdruck. Dadurch ist gewährleistet, daß der Ventilsitz von dem Steuerkolben absolut dicht verschlossen wird.

Die Arretierung des Schaltstücks wird über einen Regelkolben erreicht, der entgegen der Wirkung einer entsprechend dem Ansprechdruck vorgespannten Feder durch das Druckmedium verschoben werden kann und beim Erreichen einer Schaltstellung die Arretiermittel des Schaltstücks aufnimmt, so daß das Schaltstück freigegeben wird.

Weitere Merkmale der Erfindung ergeben sich aus den Unteransprüchen.

Ein Ausführungsbeispiel des erfindungsgemäßen Sicherheitsventils ist in den Zeichnungen dargestellt.

Es zeigen:
- Fig. 1: das Sicherheitsventil im Längsschnitt und zwar in der oberen Hälfte in der Verschlußstellung und in der unteren Hälfte in der Öffnungsstellung, und
- Fig. 2: eine zweiteilige Gabel, mit der das Schaltstück entgegen der Wirkung der zugeordneten Feder in die Ausgangsstellung bewegt wird.

Das Sicherheitsventil weist ein Gehäuse 1 auf, in dem ein Ventilsitz 2 angeordnet ist.

Dem Ventilsitz 2 ist als Ventilkörper ein Steuerkolben 3 zugeordnet, der einen Ringflansch 4 aufweist, an dem sich eine Feder 5 abstützt, die sich in dem aufgezeigten Ausführungsbeispiel aus mehreren Tellerfedern zusammensetzt.

Anderendig stützt sich die Feder 5 an einem Schaltstück 6 ab, das in der Verschlußstellung des Steuerkolbens durch Kugeln 7 arretiert wird, die in radial sich erstreckenden Aufnahmebohrungen eines Führungsstücks 8 angeordnet sind und in der Verschlußstellung des Steuerkolbens 3 in eine ringförmige Ausnehmung 9 des Schaltstücks 6 teilweise eingreifen.

Das Führungsstück 8 ist ortsfest dadurch in dem Gehäuse 1 angeordnet, daß es mit einem Gewindeflansch 10 in ein Innengewinde des Gehäuses eingeschraubt ist.

In dieses Innengewinde ist auch ein Gewindeflansch 11 eines Gehäuseteils 12 eingeschraubt, der eine zweite Feder 13 aufnimmt, die einem Regelkolben 14 zugeordnet ist.

Diese Feder 13 ist im dargestellten Ausführungsbeispiel als zylindrische Schraubenfeder ausgebildet, die einen Teil des Regelkolbens 14 umschließt und sich an einem Ende an einer Fläche 15 des Führungsstücks 8 abstützt. An dem gegenüberliegenden Ende stützt sich die Feder an einer Kolbenfläche 16 ab.

Die Vorspannung der Feder 13 kann durch Beilegscheiben 17 beeinflußt werden.

Der Regelkolben 14 ist an der dem Ventilsitz zugewandten Seite mit einem Zapfen 18 ausgerüstet, der in eine Druckkammer 19 des Steuerkolbens 3 eingreift. Zwischen dem Steuerkolben 3 und dem Zapfen 18 ist eine Dichtung 20 vorgesehen.

Eine abgezweigte Menge des geförderten Druckmedium wird dem Sicherheitsventil durch einen mittigen Kanal 21 des Ventilsitzes 2 zugeführt. Mit diesem mittigen Kanal 21 fluchtet ein mittiger Kanal 22 des Steuerkolbens 3, der in eine Druckkammer 19 mit größerem Durchmesser einmündet, so daß eine hydraulisch wirksame Ringfläche 23 ergibt, die zusammen mit der Feder 5 unter Belastung durch das Druckmedium die Schließkraft des Steuerkolbens 3 bildet.

Der Regelkolben 14 weist einen über seine gesamte Länge sich erstreckenden mittigen Kanal 24 auf, der in eine Steuerkammer 25 einmündet, die einen größeren Durchmesser besitzt als der Kanal und somit eine hydraulisch wirksame Ringfläche 26 bildet, die durch das durch den Kanal 24 in die Steuerkammer 25 geführte Druckmedium beaufschlagt wird.

In die Steuerkammer 25 greift ein ortsfester Führungs- und Lagerzapfen 27 ein, der Teil einer in die Endscheibe 28 des Gehäuseteil 12 eingeschraubten Schraube 29 ist. Zwischen dem Regelkolben 14 und dem Führungs- und Lagerzapfen 27 ist eine Dichtung 30 vorgesehen.

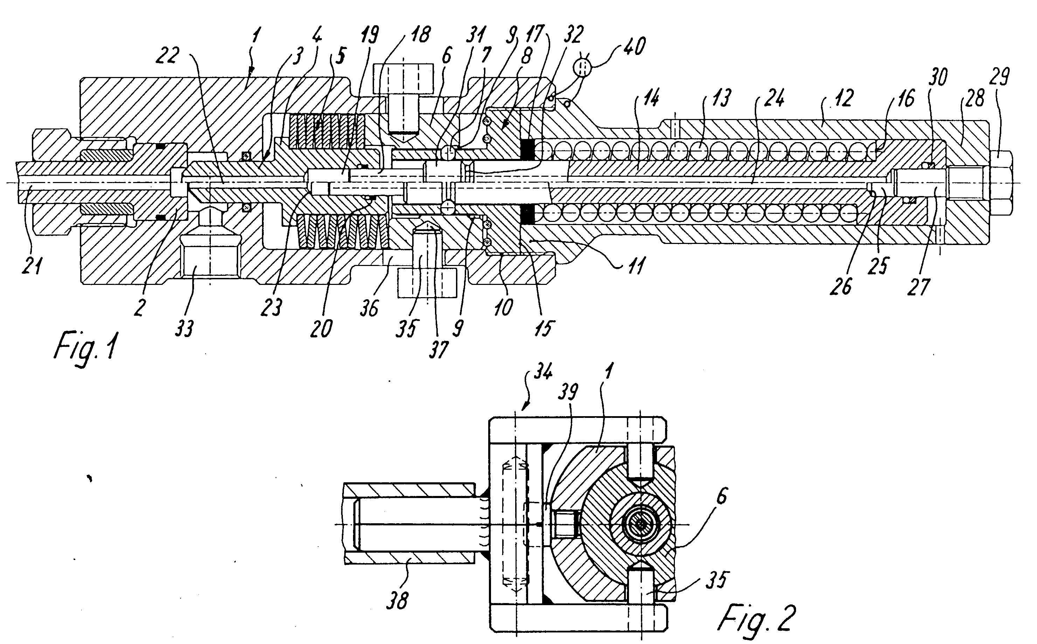

Aus der oberen Hälfte der Fig. 1 ist zu entnehmen, daß die Arretierung der Kugeln 7 in der Verschlußstellung des Steuerkolbens 3 durch einen zylindrischen Teil 31 des Regelkolbens 40 vorgenommen wird, durch den die Kugeln 7 in der Ausnehmung 9 des Schaltstücks 6 gehalten werden.

Am hinteren Ende wird der Teil 31 durch eine umfängliche Rille 32 begrenzt, in die ein Teil der Kugeln 7 bei der Freigabe des Schaltstücks 6 gedrückt wird. Hierzu ist es erforderlich, daß die Rille 32 in eine Lage gebracht wird, in der sie mit den Aufnahmebohrungen der Kugeln 7 fluchtet. Dies wird dann erreicht, wenn das Druckmedium den vorgesehenen Druckwert überschreitet. Die Belastung der Ringfläche 26 mit dem überhöhten Druck führt dazu, daß die Feder 13 zusammengefahren wird und sich der Regelkolben 14 und damit auch seine umfängliche Rille 32 in Richtung auf den Ventilsitz 2 zu bewegen. In der fluchtenden Lage zwischen der Rille 32 und den Aufnahmebohrungen für die Kugeln 7 wird ein Teil der einzelnen Kugeln von der Rille 32 aufgenommen und es wird das Schaltstück 6 freigegeben, so daß es unter der Wirkung der Feder 5 in die Stellung bewegen kann, die in der Fig. 1 in der unteren Hälfte aufgezeigt ist. Hierbei hebt sich der Steuerkolben 3 vom Ventilsitz ab, so daß das Druckmedium über den Abflußstutzen 33 abfließen kann und die Anlage drucklos wird.

In dieser Öffnungsstellung wird der Regelkolben 14 durch die Kugeln 7 und durch das Schaltstück 6 in der im unteren Teil der Fig. 1 aufgezeigten Lage arretiert. Das Sicherheitsventil bleibt geöffnet und das Druckmedium, das Wasser kann frei durch den Abflußstutzen abfließen.

Um das Sicherheitsventil wieder zu aktivieren und den Steuerkolben 3 in die Verschlußstellung zu bringen, kann man eine zweiteilige Gabel 34 verwenden, die Zapfen 35 aufweist, die durch Langlöcher 36 des Gehäuses 1 geführt und in Bohrungen 37 des Schaltstücks 6 eingesteckt werden.

Die Gabelteile werden durch ein Rohr 38 zusammengehalten.

Bei der Bewegung des Schaltstücks stützt sich die Gabel an einer Schraube 39 ab, die im Gehäuse 1 festgelegt ist. Unter Ausnutzung der Hebelwirkung, die sich bei dieser Abstützung ergibt, wird das Schaltstück 6 in Richtung auf den Ventilsitz 2 verschoben, wobei die Feder 5 gespannt wird und der Steuerkolben 3 die Verschlußstellung einnimmt. Die Bewegung des Schaltstücks in Richtung auf den Ventilsitz 2 wird solange fortgesetzt, bis die Kugeln 7 teilweise in die Ausnehmung 9 des Schaltstücks 6 eindringen können, so daß dann die gespannte Feder 13 den Regelkolben 14 in die Lage zurückbewegt, die in der Fig. 1 in der oberen Hälfte dargestellt ist. Hierbei untergreift der zylindrische Teil 31 die Kugeln 7, so daß über diese Kugeln das Schaltstück in der Ausgangslage (Verschlußstellung des Ventils) arretiert wird.

Das Sicherheitsventil ist wieder einsatzbereit.

Die Gabel 34 sollte nach dem Aktivieren des Sicherheitsventils vom Ventil entfernt werden.

Ein Plombe 40 verhindert ein Verstellen des eingestellten Betriebsdruckes durch Wechseln der Beilegscheiben 17.

### Bezugszeichen

- 1: Gehäuse
- 2: Ventilsitz
- 3: Steuerkolben
- 4: Ringflansch
- 5: Feder
- 6: Schaltstück
- 7: Kugeln
- 8: Führungsstück
- 9: Ausnehmung
- 10: Gewindeflansch
- 11: Gewindeflansch
- 12: Gehäuseteil
- 13: Feder
- 14: Regelkolben
- 15: Fläche
- 16: Kolbenfläche
- 17: Beilegscheibe
- 18: Zapfen
- 19: Druckkammer
- 20: Dichtung
- 21: Kanal
- 22: Kanal
- 23: Ringfläche
- 24: Kanal
- 25: Steuerkammer
- 26: Ringfläche
- 27: Führungs- und Lagerzapfen
- 28: Endscheibe
- 29: Schraube
- 30: Dichtung
- 31: Teil
- 32: Rille
- 33: Abflußstutzen
- 34: Gabel
- 35: Zapfen
- 36: Langloch
- 37: Bohrung
- 38: Rohr
- 39: Schraube
- 40: Plombe

## Patentansprüche

1. Sicherheitsventil für Hochdruckpumpen, Hochdruckwasserstrahlmaschinen o.dgl. mit einem Ventilsitz (2) und einem dem Ventilsitz (2) zugeordneten, federbelasteten Steuerkolben (3), der Ventilsitz (2) und der Steuerkolben (3) mit einem mittigen Kanal (21,22) für eine vom geförderten Druckmedium abgezweigte Menge versehen sind und der Steuerkolben (3) eine vom Druckmedium beaufschlagte Ringfläche (23) aufweist, eine Feder (5) sich an einem Flansch (4) des Steuerkolbens (3) und an einem Schaltstück (6) abstützt und unter der Wirkung der Feder (5) und der vom Druckmedium beaufschlagten Ringfläche (23) der Steuerkolben (3) den Ventilsitz mit einer Kraft verschließt, die einen Druck zuläßt, der wesentlich höher als der Arbeitsdruck liegt, und daß das Schaltstück (6) durch Freigabe einer Arretierung zu der dem Ventilsitz (2) abgewandten Seite bewegbar ist, wobei zur Freigabe des Schaltstücks (6) ein Regelkolben (14) vorgesehen ist und der Regelkolben (14) über seine gesamte Länge einen mittigen, mit einer vom Druckmedium abgezweigten Menge beaufschlagten Kanal (24) aufweist, der an dem dem Ventilsitz (2) abgewandten Ende in eine Steuerkammer (25) einmündet, in die ein ortsfester Führungs- und Lagerzapfen (27) eingreift, und daß eine Dichtung (30) zwischen dem Regelkolben (14) und dem Führungs- und Lagerzapfen (27) vorgesehen ist und der Regelkolben (14) sich an einer entsprechend dem Ansprechdruck vorgespannten Feder (13) abstützt.

2. Sicherheitsventil nach Anspruch 1, dadurch gekennzeichnet, daß die dem Schaltstück (16) zugeordneten Arretiervorrichtung in radial sich erstreckenden Aufnahmebohrungen eines ortsfest in einem Gehäuse (1) angeordneten Führungsstück (8) gelagerte Kugeln (7) aufweist, die an einer Seite aus der Aufnahmebohrung herausragen und bei der Arretierung des Schaltstücks in eine ringförmige Ausnehmung (9) des Schaltstücks (6) eingreifen, während das innere Ende der Aufnahmebohrung durch ein Teil eines im Führungstück (8) axial bewegbar gelagerten Regelkolben (14) verschlossen ist, während zur Freigabe der Arretierung des Schaltstücks der Regelkolben (14) mit einer umfänglichen Rille (32) in eine fluchtende Lage mit den mit Kugeln versehenen Aufnahmebohrungen gebracht wird.

3. Sicherheitsventil nach Anspruch 1, dadurch gekennzeichnet, daß der Regelkolben (14) an dem dem Ventilsitz (2) zugewandten Ende einen Zapfen (18) aufweist, der in eine Druckkammer (19) des Steuerkolbens (3) eingreift, wobei zwischen dem Steuerkolben (3) und dem Zapfen (18) eine Dichtung (20) vorgesehen ist.

4. Sicherheitsventil nach Anspruch 1, dadurch gekennzeichnet, daß die zwischen dem Steuerkolben (3) und dem Schaltstück (6) vorgesehene Feder (5) aus Tellerfedern besteht.

5. Sicherheitsventil nach Anspruch 1, dadurch gekennzeichnet, daß dem Regelkolben (14) eine zylindrische Schraubenfeder zugeordnet ist, die sich an einem Ende an einer Kolbenfläche (16) und am anderen Ende an einer Fläche (15) des Führungsstücks (8) abstützt.

6. Sicherheitsventil nach Anspruch 5, dadurch gekennzeichnet, daß die Vorspannung der Feder (13) durch Beilegscheiben (17) beeinflußbar ist.

7. Sicherheitsventil nach einem der vorhergehenden Ansprüche, dadurch gekennzeichnet, daß in der Offenstellung des Ventils der Regelkolben (14) durch die in die umfängliche Rille (32) eingreifenden Kugeln (7) arretiert wird, die durch die Innenflächen des Schaltstücks (6) in der Rille (32) festgelegt werden.

8. Sicherheitsventil nach einem der vorhergehenden Ansprüche, dadurch gekennzeichnet, daß zur Bewegung des Schaltstücks (6) in die Ventilverschlußstellung eine zweiteilige Gabel (34) vorgesehen ist, die mit Zapfen (35) Langlöcher (36) des Gehäuses durchgreift und in radial nach außen sich erstreckende Bohrungen (37) des Schaltstücks (6) eingreift und zur Bewegung des Schaltstücks (6) sich an einem gehäusefesten Widerlager abstützt.

## Claims

1. A safety valve for high-pressure pumps, high-pressure water jet machines or the like comprising a valve seat (2) and a spring-loaded control piston (3) associated with the valve seat (2), the valve seat (2) and the control piston (3) are provided with a central passage (21, 22) for a quantity which is branched off the pressure medium being conveyed and the control piston (3) has an annular surface (23) which is acted upon by the pressure medium, a spring (5) bears against a flange (4) on the control piston (3) and against a shift portion (6) and under the effect of the spring (5) and the annular surface (23) which is acted upon by the pressure medium the control piston (3) closes the valve seat with a force which permits a pressure which is substantially higher than the working pressure, and the shift portion (6), by release of an arresting means, is movable to the side which is remote from the valve seat (2), wherein a regulating piston (14) is provided for release of the shift portion (6) and the regulating piston (14) has over its entire length a central passage (24) which is acted upon by a quantity branched off the pressure medium, the passage (24) opening at the end remote from the valve seat (2) into a control chamber (25) into which a stationary guide and mounting projection (27) engages, and a seal (30) is provided between the regulating piston (14) and the guide and mounting projection (27) and the regulating piston (14) bears against a spring (13) which is prestressed in accordance with the response pressure.

2. A safety valve according to claim 1 characterised in that the arresting device which is associated with the shift portion (6) has balls (7) mounted in radially extending receiving bores in a guide portion (8) arranged stationarily in a housing (1), the balls (7) projecting out of the receiving bore at one side and when the shift portion is arrested engaging into an annular recess (9) in the shift portion (6) while the inner end of the receiving bore is closed by a part of the regulating piston (14) which is axially movably mounted in the guide portion (8) while to release the arresting effect on the shift portion the regulating piston (14) is moved with a peripheral groove (32) into an aligned position with the receiving bores provided with balls.

3. A safety valve according to claim 1 characterised in that at the end towards the valve seat (2) the regulating piston (14) has a projection (18) which engages into a pressure chamber (19) of the control piston (3), a seal (20) being provided between the control piston (3) and the projection (18).

4. A safety valve according to claim 1 characterised in that the spring (5) disposed between the control piston (3) and the shift portion (6) comprises plate springs.

5. A safety valve according to claim 1 characterised in that associated with the regulating piston (14) is a cylindrical coil spring which bears at one end against a piston surface (16) and at the other end against a surface (15) of the guide portion (8).

6. A safety valve according to claim 5 characterised in that the prestressing of the spring (13) can be influenced by shim plates (17).

7. A safety valve according to one of the preceding claims characterised in that in the open position of the valve the regulating piston (14) is arrested by the balls (7) which engage into the peripheral gorove (32) and which are fixed in the groove (32) by the inside surfaces of the shift portion (6).

8. A safety valve according to one of the preceding claims characterised in that a two-part fork (34) is provided for moving the shift portion (6) into the valve-closure position, which fork engages with projections (35) through slots (36) in the housing and engages into radially outwardly extending bores (37) in the shift portion (6) and is supported against a support which is fixed with respect to the housing, for movement of the shift portion (6).

## Revendications

1. Soupape de sûreté pour des pompes à haute pression, des machines à jet d'eau à haute pression ou analogues, comprenant un siège de soupape (2) et un piston de commande (3) sollicité par ressort et associé au siège de soupape (2), dans laquelle le siège de soupape (2) et le piston de commande (3) sont munis d'un canal médian (21, 22) pour une quantité déviée du fluide sous pression entraîné, et le piston de commande (3) présente une surface annulaire (23) exposée au fluide sous pression, un ressort (5) s'appuie contre une bride (4) du piston de commande (3) et contre une pièce de commutation (6) et le piston de commande (3), sous l'effet du ressort (5) et de la surface annulaire (23) exposée au fluide sous pression, ferme le siège de soupape avec une force qui autorise une pression qui est largement supérieure à la pression de travail, et la pièce de commutation (6) est mobile par dégagement d'un arrêt vers le côté opposé au siège de soupape (2), un piston de régulation (14) étant prévu pour libérer la pièce de commutation (6) et le piston de régulation (14) présente sur toute sa longueur un canal médian (24) exposé à une quantité déviée du fluide sous pression, canal qui débouche au niveau de l'extrémité opposée au siège de soupape (2) dans une chambre de commande (25), dans laquelle s'engage un doigt de guidage et de maintien (27) immobile, et un joint (30) est prévu entre le piston de régulation (14) et le doigt de guidage et de maintien (27) et le piston de régulation (14) s'appuie sur un ressort (13) mis sous précontrainte de manière correspondante à la pression de réaction.

2. Soupape de sûreté selon la revendication 1, caractérisée en ce que le dispositif d'arrêt associé à la pièce de commutation (6) présente des billes (7) montées dans des perçages récepteurs s'étendant radialement, ménagés dans une pièce de guidage (8) montée immobile dans un boîtier (1), lesquelles billes dépassent d'un côté hors des perçages récepteurs et s'engagent lors de l'arrêt de la pièce de commutation dans un évidement annulaire (9) de la pièce de commutation (6), alors que l'extrémité intérieure du perçage récepteur est fermée par une partie d'une piston de régulation (14) monté mobile dans le sens axial dans la pièce de guidage (8), alors que, pour libérer l'arrêt de la pièce de commutation, le piston de régulation (14) est amené avec une rainure périphérique (32) en position alignée avec les perçages récepteurs munis des billes.

3. Soupape de sûreté selon la revendication 1, caractérisée en ce que le piston de régulation (14) présente, à l'extrémité tournée vers le siège de soupape (2), un doigt (18) qui s'engage dans une chambre de pression (19) du piston de commande (3), un joint (20) étant prévu entre le piston de commande (3) et le doigt (18).

4. Soupape de sûreté selon la revendication 1, caractérisée en ce que le ressort (5) prévu entre le piston de commande (3) et la pièce de commutation (6) est constitué de rondelles-ressorts.

5. Soupape de sûreté selon la revendication 1, caractérisée en ce qu'au piston de régulation (14) est associé un ressort hélicoïdal cylindrique, qui s'appuie à une extrémité contre une surface (16) du piston et à l'autre extrémité contre une surface (15) de la pièce de guidage (8).

6. Soupape de sûreté selon la revendication 5, caractérisée en ce que la précontrainte du ressort (13) peut être influencée par des rondelles intercalaires (17).

7. Soupape de sûreté selon l'une des revendications précédentes, caractérisée en ce que, dans la position ouverte de la soupape, le piston de régulation (14) est arrêté par les billes (7) s'engageant dans la rainure périphérique (32), lesquelles sont immobilisées dans la rainure (32) par les surfaces intérieures de la pièce de commutation (6).

8. Soupape de sûreté selon l'une des revendications précédentes, caractérisée en ce que, pour le mouvement de la pièce de commutation (6) vers la position de fermeture de la soupape, un fourche (34) en deux parties est prévue, qui traverse avec des doigts (35) des trous oblongs (36) du boîtier et s'engage dans des perçages (37) de la pièce de commutation (6), lesquels s'étendent vers l'extérieur dans le sens radial, et qui s'appuie contre un contre-appui solidaire du boîtier pour déplacer la pièce de commutation (6).
